# EUROPEAN PATENT APPLICATION

(11) **EP 4 303 138 A1**
(43) Date of publication of application: **10.01.2024**
(21) Application number: 22781542.0
(22) Date of filing: 28.03.2022
(51) Int. Cl.: B65B 11/52, B65B 57/14, B65B 35/12, G01N 21/95

(54) **DRUG DISPENSING UNIT FOR BLISTER PACK, AND BLISTER PACKING APPARATUS FOR DRUG COMPRISING SAME**

(30) Priority: 29.03.2021 KR 20210040711
(71) Applicant: Cretem Co., Ltd., Anyang-si, Gyeonggi-do 14057 (KR)
(72) Inventor: KIM, Hoyeon, Anyang-si Gyeonggi-do 14062 (KR)
(74) Representative: BCKIP Part mbB
(86) International application number: PCT/KR2022/004345
(87) International publication number: WO 2022/211423

(57) **Abstract**

Disclosed are: a drug dispensing unit for a blister pack, wherein the drug dispensing unit dispenses and drops, single doses of drugs, according to the prescriptions, into respective drug pockets of a blister sheet having a plurality of the drug pockets; and a blister packing apparatus for drugs, wherein the blister packing apparatus comprises the drug dispensing unit. The drug dispensing unit for a blister pack disclosed herein has a drug tester which receives falling drugs, inspects whether the drugs are normal drugs corresponding to single doses of the drugs, or defective drugs that are not the normal drugs, and drops the tested drugs down again. The drug tester has a rotating body which rotates about an axis parallel to the direction of gravity, and has an upper panel and a lower panel spaced apart from and parallel to each other and a drug carrier interposed between the upper panel and the lower panel. As the rotating body rotates, the drug carrier circulates by sequentially passing through a drug input position, at which the drugs falling into the drug tester are accommodated in the drug carrier, a drug testing position, at which the drugs accommodated in the drug carrier are tested to determine whether the drugs are normal drugs or defective drugs, and a drug drop position, at which the drugs are released from the drug carrier and dropped down below the rotating body.

## Description

### [Technical Field]

The present invention relates to a drug dispensing unit for a blister pack that dispenses drugs of unit doses to a blister sheet, and a blister packing apparatus for drugs that is provided with the drug dispensing unit for a blister pack.

### [Background Art]

Drugs prepared in hospitals or pharmacies according to prescriptions are packaged in unit doses in plastic bags, or are packaged and sealed in a blister pack. The blister pack includes a blister sheet including a plurality of drug pockets arranged in a matrix and a cover attached to an upper surface of the blister sheet in order to hermetically seal the plurality of drug pockets. A method of packaging and sealing drugs using a blister pack is increasingly used because the method has effects of preventing theft, loss, or abuse of drugs and assisting a user in correctly taking drugs when a drug-taking procedure is complicated, for example, when drugs to be taken after lunch and drugs to be taken after dinner are different from each other.

In order to improve efficiency of packaging drugs in a blister pack according to a prescription, a blister packing apparatus for drugs capable of automatically dispensing drugs of unit doses and packaging the same in a blister pack is required. The blister packing apparatus needs to include a drug dispensing unit for a blister pack that automatically dispenses drugs falling down through a hopper in unit doses in a plurality of drug pockets of a blister sheet.

Related Art Document: Korean Patent Registration No. 10-0343788

### [Disclosure]

### [Technical Problem]

The present invention provides a drug dispensing unit for a blister pack that automatically performs processes of determining whether there is an error in drugs falling down from a drug supply unit based on a prescription and, if there is no error, dispensing and dropping the drugs of unit doses to a plurality of drug pockets of a blister sheet, and a blister packing apparatus for drugs including the same.

### [Technical Solution]

The present invention provides a drug dispensing unit for a blister pack including a drug inspection device. The drug dispensing unit for a blister pack dispenses and drops drugs prepared in a unit dose according to a prescription to each of a plurality of drug pockets formed in a blister sheet. The drug inspection device receives drugs falling down, inspects whether the received drugs are normal drugs corresponding to the drugs prepared in a unit dose or defective drugs other than the normal drugs, and drops the drugs after completion of the inspection. The drug inspection device includes a rotating body. The rotating body rotates about an axis parallel to a direction of gravity, and includes an upper panel and a lower panel spaced apart from each other in parallel and a drug carrier interposed between the upper panel and the lower panel. As the rotating body rotates, the drug carrier circulates while sequentially passing through a drug introduction position at which the drugs falling down to the drug inspection device are received in the drug carrier, a drug inspection position at which whether the drugs received in the drug carrier are the normal drugs or the defective drugs is inspected, and a drug dropping position at which the drugs are discharged from the drug carrier and are dropped to a region below the rotating body.

The drug dispensing unit for a blister pack of the present invention may further include a drug direction switching device, a dispensing block, and a shutter. The drug direction switching device changes a moving direction of the drugs falling down from the drug inspection device so that a moving direction of the normal drugs and a moving direction of the defective drugs differ from each other. The dispensing block is disposed below the drug direction switching device, and includes a plurality of pocket-corresponding through-holes formed therein in one-to-one correspondence with the plurality of drug pockets. The shutter openably closes lower openings of the plurality of pocket-corresponding through-holes. In this case, the normal drugs having passed through the drug direction switching device are sequentially introduced into the plurality of pocket-corresponding through-holes in a closed state of the lower openings of the plurality of pocket-corresponding through-holes by the shutter. In the state in which the blister sheet is located below the dispensing block so as to be aligned with the dispensing block, when the lower openings of the plurality of pocket-corresponding through-holes closed by the shutter are opened, the drugs received in the plurality of pocket-corresponding through-holes may be introduced into the plurality of drug pockets.

The drug inspection device may further include a camera and a mirror. The camera captures an image of an interior of the drug carrier located at the drug inspection position. The mirror refracts a path of light radiated at the drug inspection position toward the camera so that the camera is disposed at a position not overlapping the rotating body in a vertical direction.

The drug carrier may be movable between a first position defined between the upper panel and the lower panel and a second position closer to the axis than the first position. In this case, the drug carrier may be located at the first position when located at the drug introduction position and the drug inspection position, and may be located at the second position when located at the drug dropping position.

The drug carrier may include an inner side surface extending while forming a closed curve so as to define an inner space including an upper opening and a lower opening formed in an upper side and a lower side thereof, the upper panel may include an upper panel through-hole formed therein so as to overlap the upper opening of the drug carrier located at the first position, and the lower panel may include a lower panel through-hole formed therein so as to overlap the lower opening of the drug carrier located at the second position.

The drug inspection device may include a camera configured to capture an image of an interior of the drug carrier located at the first position of the drug inspection position, a mirror disposed above the rotating body to refract a path of light radiated at the drug inspection position toward the camera so that the camera is disposed at a position not overlapping the rotating body in a vertical direction, and a lower lamp disposed below the rotating body to emit light toward the drug carrier located at the first position of the drug inspection position, and the lower panel may be provided with a transparent window to allow the light emitted from the lower lamp to be radiated to the drug carrier through the lower panel.

The transparent window may be removably attached to the lower panel in order to enable replacement of an old transparent window having many scratches with a new transparent window having no scratches.

The drug inspection device may further include a guide cam configured to guide the drug carrier to move from the first position to the second position along a first curved path thereof when the drug carrier is moved from the drug inspection position to the drug dropping position by rotation of the rotating body and to guide the drug carrier having passed through the drug dropping position to move from the second position to the first position along a second curved path thereof different from the first curved path.

The upper panel may include a guide through-hole formed therein around the axis so as to extend in a radial direction, and the drug carrier may include a guide protrusion formed so as to pass through the guide through-hole and to protrude above the upper panel. When the guide protrusion is located at one end of the guide through-hole farthest from the axis, the drug carrier may be located at the first position, and when the guide protrusion is located at the other end of the guide through-hole closest to the axis, the drug carrier may be located at the second position.

The drug carrier may be provided in plural, and the plurality of drug carriers may be disposed at regular angular intervals about the axis.

The drug direction switching device may include a defective-drug receiving container configured to receive the defective drugs falling down, a normal-drug guide channel configured to guide the normal drugs to the dispensing block, and a direction switching valve configured to guide the drugs falling down from the drug inspection device to one of the defective-drug receiving container and the normal-drug guide channel according to a result of the inspection by the drug inspection device.

The dispensing block may be movable in a horizontal direction perpendicular to a direction of gravity such that the drugs are sequentially received in the plurality of pocket-corresponding through-holes in a closed state of the lower openings thereof.

The shutter may have a flat plate shape, may be disposed under the dispensing block, and may move between a closed position at which the shutter closes the lower openings of all of the pocket-corresponding through-holes in the dispensing block and an open position at which the shutter opens the lower openings of all of the pocket-corresponding through-holes in the dispensing block.

In addition, a blister packing apparatus for drugs in accordance with another aspect of the present invention includes the above-described drug dispensing unit for a blister pack, a drug supply unit, a blister sheet supply unit, a cover attaching unit, and a blister sheet feeding unit. The drug supply unit is disposed above the drug dispensing unit for a blister pack to drop drugs to the drug inspection device. The blister sheet supply unit drops and supplies a blister sheet having no drugs in the plurality of drug pockets one by one. The cover attaching unit attaches a cover to an upper surface of the blister sheet, with the plurality of drug pockets filled with the drugs, to form a blister pack having the plurality of closed drug pockets. The blister sheet feeding unit feeds the blister sheet falling down from the blister sheet supply unit to a position below the dispensing block so as to be aligned with the dispensing block, and feeds the blister sheet, with the plurality of drug pockets filled with the drugs falling down from the dispensing block, to the cover attaching unit.

The blister sheet may be fed to a position below the dispensing block so as to be aligned with the dispensing block by the blister sheet feeding unit between a time point at which the drugs start to be received in the dispensing block in a closed state of the shutter and a time point at which the shutter is opened.

### [Advantageous Effects]

The drug dispensing unit for a blister pack according to the present invention automatically performs processes of determining whether drugs falling down from a drug supply unit are normal drugs based on a prescription and, if the drugs are normal drugs, dispensing and dropping the drugs of unit doses to a plurality of drug pockets of a blister sheet. Accordingly, the speed of blister-packing drugs is improved.

In the drug dispensing unit for a blister pack according to an exemplary embodiment of the present invention, which is provided with a plurality of drug carriers, normal drugs of three unit doses or more sequentially fall down per rotation of a rotating body. Accordingly, the speed of blister-packing drugs is further improved.

In the blister packing apparatus for drugs according to an exemplary embodiment of the present invention, the blister sheet is moved to a position below a dispensing block so as to be aligned with the dispensing block between a time point at which drugs start to be received in the dispensing block and a time point at which a shutter is opened. In detail, the operation of a blister sheet supply unit, the operation of a blister sheet feeding unit, and the operation of the drug dispensing unit for a blister pack may be performed with a temporal overlap, and accordingly, the speed of blister-packing drugs is further improved.

### [Description of Drawings]

FIG. 1 is a perspective view showing an example of a blister pack for drug packaging.
FIG. 2 is a front view of a blister packing apparatus for drugs according to an embodiment of the present invention.
FIG. 3 is a side view of the drug dispensing unit shown in FIG. 2.
FIG. 4 is a plan view showing the rotating block and the error inspection device shown in FIG. 3.
FIG. 5 is a plan view showing the grid block shown in FIG. 3 and a grid block frame supporting the same.

### [Best Mode]

Hereinafter, a drug dispensing unit for a blister pack and a blister packing apparatus for drugs including the same according to embodiments of the present invention will be described in detail with reference to the accompanying drawings. Terms used in this specification are used to appropriately describe exemplary embodiments of the present invention, and thus may be changed in accordance with the intention of users or operators, or usual practice in the art to which the present invention pertains. Therefore, the definitions of these terms should be determined based on the total content of this specification.

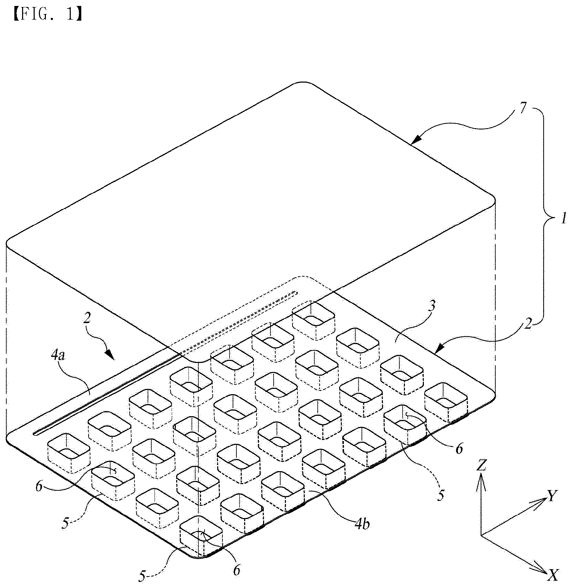

FIG. 1 is a perspective view showing an example of a blister pack for drug packaging. Referring to FIG. 1, a blister sheet 2 for drug packaging used to package drugs prepared according to a prescription includes a flat portion 3 and a plurality of pocket portions 5 convexly protruding downward from the flat portion 3. The plurality of pocket portions 5 is formed so as to be spaced apart from each other. A plurality of drug pockets 6 is formed so as to be open upward so that falling drugs are received in unit doses in the plurality of pocket portions 5. The plurality of drug pockets 6 is arranged in a matrix. In the illustrated blister sheet 2, the drug pockets 6 are arranged in 7 rows and 4 columns so as to be filled with a maximum of one week's supply of prepared drugs.

When the plurality of drug pockets 6 is filled with drugs, a sheet-type cover 7 is attached to an upper surface of the flat portion 3 of the blister sheet 2 in order to hermetically seal the plurality of drug pockets 6. A blister pack 1 accommodates and seals the drugs in a state of separating the drugs in unit doses. The blister pack 1 includes the blister sheet 2 in which drugs are accommodated and the cover 7 attached to the blister sheet 2. The lower surface of the cover 7 that is attached to the upper surface of the flat portion 3 of the blister sheet 2 is an adhesive surface to which an adhesive is applied. A user may press and tear the cover 7 using his/her fingers or a tool to pull the drugs from the drug pockets 6 and take the same.

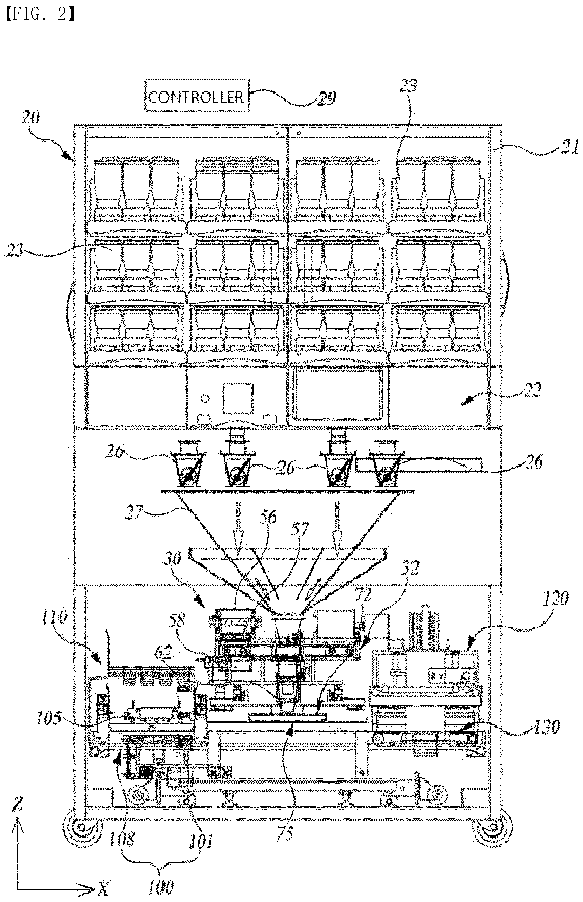

FIG. 2 is a front view of a blister packing apparatus for drugs according to an embodiment of the present invention. Referring to FIGs. 1 and 2 together, a blister packing apparatus 20 for drugs is an apparatus that automatically performs processes of dispensing drugs prepared in unit doses to the plurality of drug pockets 6 of the blister sheet 2 (refer to FIG. 1) and hermetically sealing the blister sheet 2 using the cover 7 to form the blister pack 1, and is mainly provided in large hospitals or pharmacies.

The blister packing apparatus 20 for drugs includes a cabinet-type housing 21, and includes a drug supply unit 22, a drug dispensing unit 30 for a blister pack, a blister sheet supply unit 110, a cover attaching unit 120, and a blister sheet feeding unit 100, which are provided in the housing 21. The drug supply unit 22 is located in an upper portion of the housing 21, and the drug dispensing unit 30 for a blister pack, the blister sheet supply unit 110, the cover attaching unit 120, and the blister sheet feeding unit 100 are located below the drug supply unit 22 in the housing 21. In addition, the blister packing apparatus 20 for drugs further includes a controller 29 configured to control operation of the drug supply unit 22, the drug dispensing unit 30 for a blister pack, the blister sheet supply unit 110, the cover attaching unit 120, and the blister sheet feeding unit 100.

The drug supply unit 22 includes a plurality of drug cassettes 23 and hoppers 26 and 27. The plurality of drug cassettes 23 accommodates different kinds of drugs. The hoppers 26 and 27 collect the drugs discharged from the drug cassettes 23 and guide the collected drugs to be sequentially discharged downward. In detail, specific drugs corresponding to a prescription input through a server or a user interface are discharged from the drug cassettes 23 storing the same, and fall down through a drug falling passage (not shown). The drugs are collected in a plurality of intermediate hoppers 26 disposed under the plurality of drug cassettes 23, fall down therefrom in an adjusted falling order, and sequentially fall down in unit doses through a final hopper 27 according to the prescription.

The drug dispensing unit 30 for a blister pack receives the drugs falling down from the final hopper 27 of the drug supply unit 22, inspects whether the received drugs are drugs prepared in a unit dose according to the prescription, and dispenses and drops the drugs of a unit dose to each of the plurality of drug pockets 6 of the blister sheet 2. The blister sheet supply unit 110 is disposed on the left side of the drug dispensing unit 30, and drops and supplies a blister sheet 2 having no drugs in the plurality of drug pockets 6 one by one. The cover attaching unit 120 is disposed on the right side of the drug dispensing unit 30, and attaches the cover 7 to the upper surface of the flat portion 3 of the blister sheet 2, with the plurality of drug pockets 6 filled with the drugs, to form the blister pack 1.

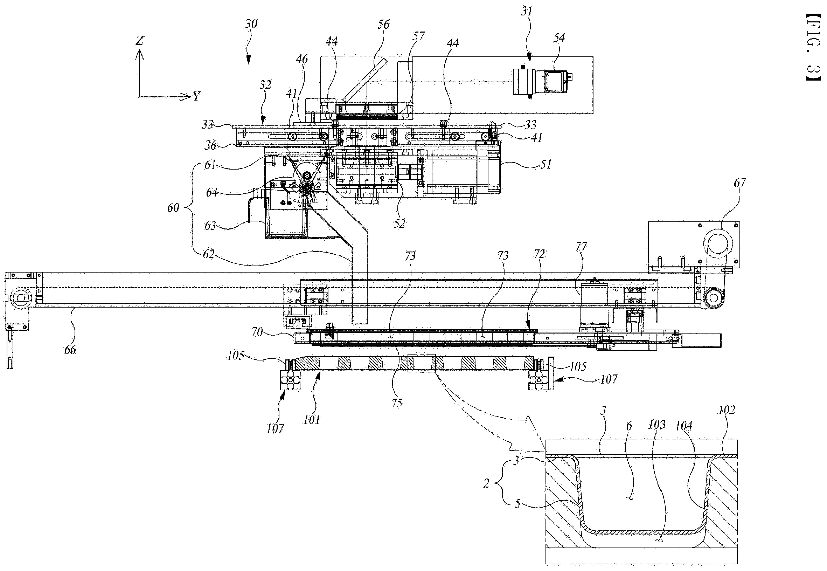

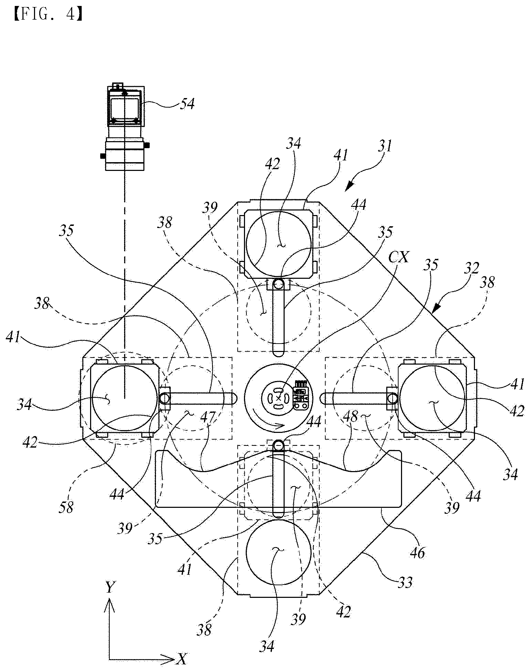

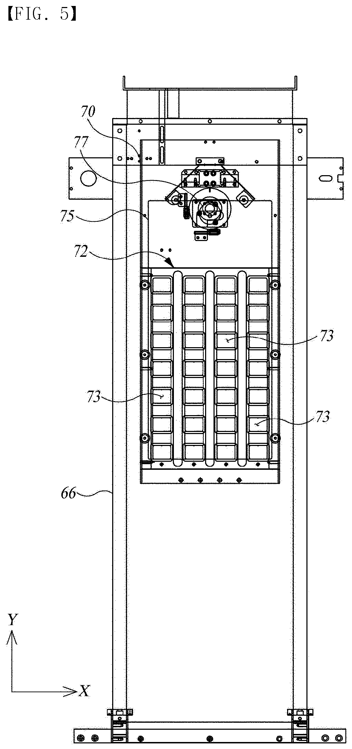

FIG. 3 is a side view of the drug dispensing unit shown in FIG. 2. FIG. 4 is a plan view showing the rotating block and the error inspection device shown in FIG. 3. FIG. 5 is a plan view showing the grid block shown in FIG. 3 and a grid block frame supporting the same. Referring to FIGs. 1 to 3 together, the blister sheet feeding unit 100 feeds the blister sheet 2 falling down from the blister sheet supply unit 110 to a region below the drug dispensing unit 30. In addition, the blister sheet feeding unit 100 feeds the blister sheet 2, with the plurality of drug pockets 6 filled with the drugs by the drug dispensing unit 30, to the cover attaching unit 120.

In detail, the blister sheet feeding unit 100 includes a blister sheet tray 101, a tray driver 108, and a pair of guide rails 107. The blister sheet tray 101 is provided so as to be intermittently movable in a direction parallel to an X-axis in regions below the blister sheet supply unit 110, the drug dispensing unit 30, and the cover attaching unit 120. The tray driver 108 moves the blister sheet tray 101 in a direction parallel to the X-axis. The pair of guide rails 107 extends in a direction parallel to the X-axis in order to guide movement of the blister sheet tray 101.

Guide rollers 105 are mounted on a front surface and a rear surface of the blister sheet tray 101. The guide rollers 105 are engaged with the guide rails 107 in order to guide movement of the blister sheet tray 101 in a direction parallel to the X-axis.

The blister sheet tray 101 includes a flat portion support surface 102 and a plurality of pocket-portion-corresponding cavities 103. The flat portion support surface 102 supports the flat portion 3 of the blister sheet 2. The plurality of pocket-portion-corresponding cavities 103 is formed to allow the plurality of pocket portions 5 of the blister sheet 2, which protrude downward, to be fitted thereinto in one-to-one correspondence.

Inner side surfaces 104 of the pocket-portion-corresponding cavities 103 are formed to be tapered so that the pocket portions 5 protruding downward in a tapered manner are brought into surface contact therewith and supported thereby. Therefore, when the blister sheet tray 101 on which the blister sheet 2 is seated is moved at high speed, the blister sheet 2 is prevented from being separated from the blister sheet tray 101.

When the blister sheet 2 falling down from the blister sheet supply unit 110 is seated on the blister sheet tray 101 located below the blister sheet supply unit 110, the blister sheet tray 101 is moved to and stopped at a position aligned with a dispensing block 72 below the drug dispensing unit 30. The drugs corresponding to the prescription in the drug dispensing unit 30 fall down from the dispensing block 72 at once, and are received in the plurality of drug pockets 6.

When the blister sheet tray 101 on which the blister sheet 2, with the plurality of drug pockets 6 filled with the drugs, is seated is moved to and stopped at a position below the cover attaching unit 120, the cover 7 is attached to the upper surface of the flat portion 3 of the blister sheet 2 to completely form the blister pack 1.

The blister pack 1 is lifted upward so as to be separated from the blister sheet tray 101, and the blister sheet tray 101 separated from the blister sheet 2 is moved back to a position at which a new blister sheet 2 having no drugs in the plurality of drug pockets 6 falls down to be seated on the blister sheet tray 101, that is, a position below the blister sheet supply unit 110.

The blister packing apparatus 20 for drugs further includes a blister pack discharge conveyor 130. The blister pack discharge conveyor 130 may be disposed between the pair of guide rails 107 of the blister sheet feeding unit 110 at a position below the cover attaching unit 120. After attachment of the cover 7, the blister pack discharge conveyor 130 discharges the completely formed blister pack 1 outside of the cover attaching unit 120, specifically, to a loading position outside the housing 21.

Referring to FIGs. 3 to 5 together, the drug dispensing unit 30 includes a drug inspection device 31, a drug direction switching device 60, a dispensing block 72, and a shutter 75. The drug inspection device 31 receives the drugs falling down through the final hopper 27, and inspects whether the received drugs are normal drugs corresponding to the drugs prepared in a unit dose or defective drugs other than the normal drugs. The drug inspection device 31 includes a rotating body 32, a camera 54, a mirror 56, a lower lamp 58, a ring-shaped upper lamp 57, and a guide cam 46.

The rotating body 32 is formed to rotate about an axis CX parallel to the direction of gravity, that is, parallel to a Z-axis, and includes upper and lower panels 33 and 36 and a plurality of drug carriers 41. The upper and lower panels 33 and 36 have a diamond shape and are disposed to be spaced apart from each other in parallel. The plurality of drug carriers 41 is interposed between the upper panel 33 and the lower panel 36. The plurality of drug carriers 41 is disposed at regular angular intervals at positions apart from the axis CX. In the illustrated embodiment, four drug carriers 41 are disposed at intervals of 90° around the axis CX. However, three drug carriers 41 may be disposed at intervals of 120° around the axis CX.

As the rotating body 32 rotates, each of the drug carriers 41 circulates while sequentially passing through a drug introduction position, a drug inspection position, a drug dropping position, and a standby position. Based on FIG. 4, the rotating body 32 rotates in the counterclockwise direction. Among the four drug carriers 41, the drug carrier 41 having the largest Y-axis coordinate value is a drug carrier located at the drug introduction position. In addition, the position spaced apart from the drug introduction position by 90° in the counterclockwise direction about the axis CX is the drug inspection position, and the position spaced apart from the drug introduction position by 180° in the counterclockwise direction about the axis CX is the drug dropping position. In addition, the position spaced apart from the drug introduction position by 270° in the counterclockwise direction about the axis CX is the standby position.

The drug introduction position is a position at which the drugs falling down from the final hopper 27 (refer to FIG. 2) to the drug inspection device 31 are received in the drug carrier 41. The drug inspection position is a position at which whether the drugs received in the drug carrier 41 at the drug introduction position are normal drugs corresponding to the drugs prepared in a unit dose according to the prescription or defective drugs other than the normal drugs is inspected. The drug dropping position is a position at which the drugs inspected at the drug inspection position are discharged from the drug carrier 41 and are dropped down from the rotating body 32. The standby position is a position at which the drug carrier 41 having no drugs therein after discharge of the drugs at the drug dropping position stands by before returning to the drug introduction position. Meanwhile, unlike the embodiment illustrated in FIG. 2, in the case of an embodiment in which only three drug carriers are provided at the rotating body so as to be spaced apart from each other at regular angular intervals, the standby position is not provided.

Each of the drug carriers 41 is formed to be movable between a first position defined between the upper panel 33 and the lower panel 36 and a second position closer to the axis CX than the first position.

As shown in FIG. 4, the drug carrier 41 is located at the first position when located at the drug introduction position, the drug inspection position, and the standby position, and is located at the second position when located at the drug dropping position.

In FIG. 4, the drug carrier 41 located at the first position is shown as a solid line, and the drug carrier 41 located at the second position is shown as a dotted line. Each of the drug carriers 41 has an inner side surface 42. The inner side surface 42 extends while forming a closed curve so as to define an inner space having an upper opening and a lower opening formed in an upper side and a lower side thereof. In the embodiment illustrated in FIG. 4, the planar shape of the inner side surface 42 is a circular shape. Each of the drug carriers 41 has a predetermined length in a direction parallel to the Z-axis.

The upper panel 33 has an upper panel through-hole 34 formed therein so as to overlap the upper opening of the drug carrier 41 located at the first position, and the lower panel 36 has a lower panel through-hole 73 formed therein so as to overlap the lower opening of the drug carrier 41 located at the second position. In the embodiment illustrated in FIG. 4, the inner diameters of the upper panel through-hole 34 and the lower panel through-hole 73 are identical to the inner diameter of the inner side surface 42 of the drug carrier 41. However, the configuration of FIG. 4 is merely illustrative, the upper panel through-hole 34 and the lower panel through-hole 73 may be different in planar shape or size from the inner side surface 42 of the drug carrier 41.

The upper panel 33 has guide through-holes 35 formed therein around the axis CX so as to extend in a radial direction. The guide through-holes 35 are provided in a number identical to the number of drug carriers 41. Each of the drug carriers 41 includes a guide protrusion 44 formed corresponding to a respective one of the plurality of guide through-holes 35. The guide protrusion 44 passes through the guide through-hole 35 and protrudes above the upper panel 33. When the guide protrusion 44 is located at one end of the guide through-hole 35 that is farthest from the axis CX, the drug carrier 41 is located at the first position. Conversely, when the guide protrusion 44 is located at the other end of the guide through-hole 35 that is closest to the axis CX, the drug carrier 41 is located at the second position.

The drugs dropped from the final hopper 27 (refer to FIG. 2) fall down to the position of the upper panel through-hole 34 formed at the drug introduction position. Accordingly, the drugs pass through the upper panel through-hole 34 and are received in the inner space defined by the inner side surface 42 of the drug carrier 41. At this position, since the lower opening of the drug carrier 41 is closed by the lower panel 36, the drugs are confined in the inner space in the drug carrier 41 without falling down. Also, when the drug carrier 41 is located at the drug inspection position, the drug carrier 41 is located at the first position, and thus the drugs are still confined in the inner space in the drug carrier 41 without falling down.

However, when the drug carrier 41 is located at the drug dropping position, the drug carrier 41 moves to the second position. At this position, the lower opening of the drug carrier 41 overlaps the lower panel through-hole 73 and thus is open downward. Accordingly, the drugs confined in the inner space in the drug carrier 41 fall down from the rotating body 32 through the lower panel through-hole 73.

The guide cam 46 is separate from the rotating body 32 so as not to rotate, and is disposed above the rotating body 32 so as to overlap the drug dropping position. The guide cam 46 includes first and second curved paths 47 and 48. The first and second curved paths 47 and 48 interfere with the guide protrusion 44 of the drug carrier 41 to guide the drug carrier 41. The first curved path 47 is a curved path that guides the drug carrier 41 from the first position to the second position when the drug carrier 41 is moved from the drug inspection position to the drug dropping position by rotation of the rotating body 32, and the second curved path 48 is a curved path that guides the drug carrier 41 from the second position to the first position when the drug carrier 41 is moved from the drug dropping position to the standby position by rotation of the rotating body 32.

In detail, the drug carrier 41 is located at the first position when located at the drug inspection position, and as the rotating body 32 rotates, the drug carrier 41 is rotated together therewith and is moved to the drug dropping position. In this case, the upper end portion of the guide protrusion 44 is blocked by a ridge portion of the first curved path 47, and thus the drug carrier 41 is not moved to the first position of the drug dropping position, but is moved to the second position of the drug dropping position along the first curved path 47.

As the rotating body 32 rotates, the drug carrier 41 located at the second position of the drug dropping position is rotated together therewith and is moved to the standby position. In this case, the drug carrier 41 is pushed in a direction away from the axis CX by centrifugal force, and at the same time, the guide protrusion 44 is blocked by a ridge portion of the second curved path 48, and thus the drug carrier 41 is gradually moved to and located at the first position along the second curved path 48.

Meanwhile, the means for moving the drug cassette 41 from the first position to the second position when the drug carrier is moved to the drug dropping position is not limited to the guide cam 46. For example, a spring may be used to elastically press the drug carrier from the first position to the second position. However, the means using the spring may have a more complicated structure and may occupy larger space than the guide cam 46 shown in FIG. 4, and may thus be disadvantageous in designing the blister packing apparatus 20 for drugs in a compact structure. Reference numeral 51 denotes a motor 51 that provides power for rotation of the rotating body 32, and reference numeral 52 denotes a reducer that reduces the rotational speed of the motor 51 so that the rotational speed of the rotating body 32 is precisely controlled.

In order to inspect whether the drugs received in the drug carrier 41 are normal drugs or defective drugs, the camera 54 captures an image of the interior of the drug carrier 41 located at the first position of the drug inspection position. The mirror 56 is separate from the rotating body 32 so as not to rotate, and is disposed above the rotating body 32 so as to overlap the drug inspection position. The mirror 56 refracts the path of light radiated at the drug inspection position toward the camera 54 so that the camera 54 is disposed at a position that does not overlap the rotating body 32 in a vertical direction. Accordingly, the camera 54 may be disposed so as to avoid interference with the hoppers 26 and 27, and thus such a structure may be advantageous in designing the blister packing apparatus 20 for drugs in a compact structure.

A file of the image of the drugs captured by the camera 54 is transmitted to the controller 29. The controller 29 inspects the image file of the drugs to determine whether the drugs received in the drug carrier 41 located at the drug inspection position are normal drugs or defective drugs. The lower lamp 58 is separate from the rotating body 32 so as not to rotate, and is disposed below the rotating body 32 so as to overlap the drug inspection position. The ring-shaped upper lamp 57 is separate from the rotating body 32 so as not to rotate, and is disposed above the rotating body 32 and below the mirror 56 so as to overlap the drug inspection position. The lower lamp 58 and the ring-shaped upper lamp 57 emit light toward the drug carrier 41 located at the first position of the drug inspection position so that a brighter and clearer image file of the drugs is captured by the camera 54.

In order to allow the light emitted from the lower lamp 58 to be radiated to the drug carrier 41 located at the first position of the drug inspection position through the lower panel 36, transparent windows 38 are removably attached to the lower panel 36. The removable transparent windows 38 are disposed so as to overlap the drug carriers 41, and are provided in one-to-one correspondence with the plurality of drug carriers 41. In detail, the removable transparent windows 38 may be mounted to the lower panel 36 by pushing the transparent windows 38 into the lower panel 36 from outside of the outer circumferential surface of the lower panel 36 toward the axis CX, and may be separated from the lower panel 36 by pulling the transparent windows 38 out of the lower panel 36 in a radial direction away from the axis CX. The lower panel through-hole 73 may be formed in each of the removable transparent windows 38.

During long-term use of the drug inspection device 31, the drug carrier 41 repeatedly slides on the transparent window 38 in a direction toward the axis CX and a direction opposite thereto. Accordingly, the transparent window 38 may get many scratches. If the transparent window 38 has many scratches, the shape or number of drugs appears unclear in the image file of the drugs captured by the camera 54, which may cause the controller 29 to erroneously determine normal drugs to be defective drugs or erroneously determine defective drugs to be normal drugs. Therefore, the transparent window 38 having many scratches may be removed from the lower panel 36, and then a new product having no scratches may be mounted to the lower panel 36.

The drug direction switching device 60 includes a post-drug-inspection hopper 61, a defective-drug receiving container 63, a normal-drug guide channel 62, and a direction switching valve 64. The drugs falling down from the drug inspection device 31 pass through the post-drug-inspection hopper 61 and are collected. An upper opening of the post-drug-inspection hopper 61 is aligned with the lower panel through-hole 73 formed at the drug dropping position of the rotating body 32. The defective-drug receiving container 63 is a container in which, when the drugs having passed through the post-drug-inspection hopper 61 are defective drugs, the defective drugs fall and are received, and may be, for example, a cup-shaped container having a handle. Among the drugs received in the defective-drug receiving container 63, usable drugs may be transferred to the drug cassettes 23 storing drugs of a kind equal to that thereof.

The normal-drug guide channel 62 is a channel by which, when the drugs having passed through the post-drug-inspection hopper 61 are normal drugs, the normal drugs are guided to fall down to the dispensing block 72. The direction switching valve 64 guides the drugs dropped from the drug inspection device 31 and collected in the post-drug-inspection hopper 61 to one of the defective-drug receiving container 63 and the normal-drug guide channel 62. In detail, upon determining that the drugs photographed by the camera 54 at the drug inspection position are normal drugs corresponding to the drugs prepared in a unit dose, the controller 29 controls operation of the direction switching valve 64 such that the direction switching valve 64 guides the photographed drugs to the normal-drug guide channel 62 when the drugs are dropped at the drug dropping position and pass through the post-drug-inspection hopper 61. In addition, upon determining that the drugs photographed by the camera 54 at the drug inspection position are defective drugs that do not correspond to the drugs prepared in a unit dose, the controller 29 controls operation of the direction switching valve 64 such that the direction switching valve 64 guides the photographed drugs to the defective-drug receiving container 63 when the drugs are dropped at the drug dropping position and pass through the post-drug-inspection hopper 61.

The dispensing block 72 is an approximately rectangular parallelepiped-shaped block that is disposed below the drug direction switching device 60 and has a predetermined thickness. The dispensing block 72 has a plurality of pocket-corresponding through-holes 73 formed therein so as to open in the vertical direction, that is, to penetrate the dispensing block 72 in a thickness direction. The plurality of pocket-corresponding through-holes 73 is formed in one-to-one correspondence with the plurality of drug pockets 6 of the blister sheet 2. In other words, similar to the plurality of drug pockets 6, the plurality of pocket-corresponding through-holes 73 in the dispensing block 72 shown in FIG. 5 is arranged in a matrix having 7 rows and 4 columns, and gaps between adjacent pocket-corresponding through-holes 73 are equal to gaps between adjacent drug pockets 6.

The dispensing block 72 is provided to be quickly movable in a horizontal direction perpendicular to a direction of gravity, i.e. in a direction parallel to the X-axis and a direction parallel to the Y-axis. The invention is not limited to any specific mechanism moving the dispensing block 72 in the horizontal direction. The shutter 75 openably closes lower openings of the plurality of pocket-corresponding through-holes 73 formed in the dispensing block 72. The shape of the shutter 75 is a flat plate shape, and the shutter 75 is disposed under the dispensing block 72. In detail, the shape of the shutter 75 may be a rectangular flat plate shape, the length of which in a direction parallel to the X-axis is substantially equal to that of the dispensing block 72 and the length of which in a direction parallel to the Y-axis is longer than that of the dispensing block 72.

The shutter 75 is movable between a closed position at which the shutter 75 closes the lower openings of all of the pocket-corresponding through-holes 73 in the dispensing block 72 and an open position at which the shutter 75 opens the lower openings of all of the pocket-corresponding through-holes 73 in the dispensing block 72. The shutter 75 may move in a direction parallel to the Y-axis. In FIGs. 3 and 5, the shutter 75 is located at the closed position. However, when the shutter 75 moves in a direction parallel to the Y-axis and is located at the open position, the shutter 75 does not overlap the dispensing block 72 in the vertical direction, and thus the lower openings of all of the pocket-corresponding through-holes 73 in the dispensing block 72 are opened.

A shutter driving motor 77 provides power to reciprocate the shutter 75 between the open position and the closed position. A dispensing block holder 70 supports and fixes the dispensing block 72 and the shutter driving motor 77, and supports the shutter 75 such that the shutter 75 is capable of being reciprocated between the open position and the closed position. The holder support frame 66 fixedly disposed below the drug inspection device 31 supports the dispensing block holder 70 such that the dispensing block holder 70 is capable of moving in the horizontal direction parallel to the X-axis and the Y-axis. Reference numeral 67 denotes a Y-directional driving motor that provides power to move the dispensing block holder 70 in a direction parallel to the Y-axis. Illustration of an X-directional driving motor configured to provide power to move the dispensing block holder 70 in a direction parallel to the X-axis is omitted in the drawings.

In the state in which the lower openings of the plurality of pocket-corresponding through-holes 73 in the dispensing block 72 are closed by the shutter 75 located at the closed position, normal drugs intermittently fall down in unit doses from the lower end of the normal-drug guide channel 62 and are sequentially introduced into and received in the plurality of closed pocket-corresponding through-holes 73. In detail, when normal drugs of a first unit dose fall down from the lower end of the normal-drug guide channel 62, the pocket-corresponding through-hole 73 formed at the first row and first column is located so as to be aligned with the lower end of the normal-drug guide channel 62 in the vertical direction. When normal drugs of a second unit dose fall down from the lower end of the normal-drug guide channel 62, the dispensing block 72 moves slightly in a direction parallel to the X-axis such that the pocket-corresponding through-hole 73 formed at the first row and second column is located so as to be aligned with the lower end of the normal-drug guide channel 62 in the vertical direction. In this way, normal drugs of unit doses are sequentially received in the pocket-corresponding through-holes 73 from the first row and first column to the seventh row and fourth column. However, drugs may not be introduced into some of the plurality of pocket-corresponding through-holes 73 according to the prescription input to the blister packing apparatus 20 for drugs.

When the plurality of pocket-corresponding through-holes 73 is filled with normal drugs according to the prescription, the dispensing block 72 moves in the horizontal direction so as to be aligned vertically with the blister sheet 2 moving to a region below the drug dispensing unit 30 in a state of being supported by the blister sheet tray 101. In this case, all of the pocket-corresponding through-holes 73 in the dispensing block 72 and all of the drug pockets 6 of the blister sheet 2 are aligned with each other in one-to-one correspondence. In the state in which the dispensing block 72 is located above the blister sheet 2 so as to be aligned therewith in the above manner, the shutter 75 moves to the open position to open the lower openings of the plurality of pocket-corresponding through-holes 73 that have been closed by the shutter 75. Accordingly, the normal drugs received in the plurality of pocket-corresponding through-holes 73 are simultaneously dropped and received in the plurality of drug pockets 6. The blister sheet tray 101 supporting the blister sheet 2, with the plurality of drug pockets 6 filled with the normal drugs according to the prescription, is moved to and stopped at a position below the cover attaching unit 120.

According to an exemplary embodiment of the present invention, the blister sheet 2 is fed to a position below the dispensing block 72 by the blister sheet feeding unit 100 (refer to FIG. 2) so as to be aligned with the dispensing block 72 between a time point at which drugs start to be received in the dispensing block 72 in the closed state of the shutter 75, i.e. in the state in which the shutter 75 is located at the closed position, and a time point at which the shutter 75 is opened, i.e. a time point at which the shutter 75 moves to the open position.

In detail, the blister sheet 2 moves to and waits at a position at which the blister sheet 2 is capable of receiving the drugs falling down from the dispensing block 72 before preparations for dropping of the drugs from the dispensing block 72 to the blister sheet 2 are completed, rather than moving to a region below the drug dispensing unit 30 from the blister sheet supply unit 110 after preparations for dropping of the normal drugs received in the dispensing block 72 are completed. Accordingly, a time interval between a time point at which the dispensing block 72 is filled with the drugs and a time point at which the shutter 75 is opened is reduced, and as a result, efficiency of the blister packing process using the blister packing apparatus 20 for drugs is improved.

The drug dispensing unit 30 for a blister pack described above automatically performs processes of determining whether the drugs falling down from the drug supply unit 22 are normal drugs based on a prescription and, if the drugs are normal drugs, dispensing and dropping the drugs of unit doses to the plurality of drug pockets 6 of the blister sheet 2. Accordingly, the speed of blister-packing drugs is improved. In addition, in the drug dispensing unit 30 for a blister pack, normal drugs of three unit doses or more sequentially fall down per rotation of the rotating body 32. Accordingly, the speed of blister-packing drugs is further improved.

In addition, in the blister packing apparatus 20 for drugs described above, the blister sheet 2 is moved to a position below the dispensing block 72 so as to be aligned with the dispensing block 72 between a time point at which drugs start to be received in the dispensing block 72 and a time point at which the shutter 75 is opened. In detail, the operation of the blister sheet supply unit 110, the operation of the blister sheet feeding unit 100, and the operation of the drug dispensing unit 30 for a blister pack may be performed with a temporal overlap, and accordingly, the speed of blister-packing drugs is further improved.

Although the present invention has been described with reference to embodiments illustrated in the drawings, it is to be understood that the embodiments are merely exemplary and various modifications or equivalent embodiments thereof may be made from the detailed description of the present invention by those skilled in the art. Therefore, the true scope of protection of the present invention should be determined only by the appended claims.

### [Industrial Applicability]

The present invention may be used in the fields of separating and packaging prepared drugs, such as in pharmacies, hospitals, senior living communities, and drug packaging companies.

## Claims

1. A drug dispensing unit for a blister pack configured to dispense and drop drugs prepared in a unit dose according to a prescription to each of a plurality of drug pockets formed in a blister sheet, the drug dispensing unit comprising:
a drug inspection device configured to receive drugs falling down, to inspect whether the received drugs are normal drugs corresponding to the drugs prepared in a unit dose or defective drugs other than the normal drugs, and to drop the drugs after completion of the inspection,
wherein the drug inspection device comprises a rotating body configured to rotate about an axis parallel to a direction of gravity and comprising an upper panel and a lower panel spaced apart from each other in parallel and a drug carrier interposed between the upper panel and the lower panel, and
wherein, as the rotating body rotates, the drug carrier circulates while sequentially passing through a drug introduction position at which the drugs falling down to the drug inspection device are received in the drug carrier, a drug inspection position at which whether the drugs received in the drug carrier are the normal drugs or the defective drugs is inspected, and a drug dropping position at which the drugs are discharged from the drug carrier and are dropped to a region below the rotating body.

2. The drug dispensing unit according to claim 1, further comprising:
a drug direction switching device configured to change a moving direction of the drugs falling down from the drug inspection device so that a moving direction of the normal drugs and a moving direction of the defective drugs differ from each other;
a dispensing block disposed below the drug direction switching device and comprising a plurality of pocket-corresponding through-holes formed therein in one-to-one correspondence with the plurality of drug pockets; and
a shutter configured to openably close lower openings of the plurality of pocket-corresponding through-holes,
wherein the normal drugs having passed through the drug direction switching device are sequentially introduced into the plurality of pocket-corresponding through-holes in a closed state of the lower openings of the plurality of pocket-corresponding through-holes by the shutter, and
wherein, in a state in which the blister sheet is located below the dispensing block so as to be aligned with the dispensing block, when the lower openings of the plurality of pocket-corresponding through-holes closed by the shutter are opened, the drugs received in the plurality of pocket-corresponding through-holes are introduced into the plurality of drug pockets.

3. The drug dispensing unit according to claim 1, wherein the drug inspection device further comprises:
a camera configured to capture an image of an interior of the drug carrier located at the drug inspection position; and
a mirror configured to refract a path of light radiated at the drug inspection position toward the camera so that the camera is disposed at a position not overlapping the rotating body in a vertical direction.

4. The drug dispensing unit according to claim 1, wherein the drug carrier is formed to be movable between a first position defined between the upper panel and the lower panel and a second position closer to the axis than the first position, and
wherein the drug carrier is located at the first position when located at the drug introduction position and the drug inspection position, and is located at the second position when located at the drug dropping position.

5. The drug dispensing unit according to claim 4, wherein the drug carrier comprises an inner side surface extending while forming a closed curve so as to define an inner space comprising an upper opening and a lower opening formed in an upper side and a lower side thereof,
wherein the upper panel comprises an upper panel through-hole formed therein so as to overlap the upper opening of the drug carrier located at the first position, and
wherein the lower panel comprises a lower panel through-hole formed therein so as to overlap the lower opening of the drug carrier located at the second position.

6. The drug dispensing unit according to claim 5, wherein the drug inspection device comprises:
a camera configured to capture an image of an interior of the drug carrier located at the first position of the drug inspection position;
a mirror disposed above the rotating body to refract a path of light radiated at the drug inspection position toward the camera so that the camera is disposed at a position not overlapping the rotating body in a vertical direction; and
a lower lamp disposed below the rotating body to emit light toward the drug carrier located at the first position of the drug inspection position, and
wherein the lower panel is provided with a transparent window to allow the light emitted from the lower lamp to be radiated to the drug carrier through the lower panel.

7. The drug dispensing unit according to claim 6, wherein the transparent window is removably attached to the lower panel in order to enable replacement of an old transparent window having many scratches with a new transparent window having no scratches.

8. The drug dispensing unit according to claim 4, wherein the drug inspection device further comprises a guide cam configured to guide the drug carrier to move from the first position to the second position along a first curved path thereof when the drug carrier is moved from the drug inspection position to the drug dropping position by rotation of the rotating body and to guide the drug carrier having passed through the drug dropping position to move from the second position to the first position along a second curved path thereof different from the first curved path.

9. The drug dispensing unit according to claim 8, wherein the upper panel comprises a guide through-hole formed therein around the axis so as to extend in a radial direction,
wherein the drug carrier comprises a guide protrusion formed so as to pass through the guide through-hole and to protrude above the upper panel, and
wherein, when the guide protrusion is located at one end of the guide through-hole farthest from the axis, the drug carrier is located at the first position, and when the guide protrusion is located at another end of the guide through-hole closest to the axis, the drug carrier is located at the second position.

10. The drug dispensing unit according to claim 1, wherein the drug carrier is provided in plural, and
wherein the plurality of drug carriers is disposed at regular angular intervals about the axis.

11. The drug dispensing unit according to claim 2, wherein the drug direction switching device comprises:
a defective-drug receiving container configured to receive the defective drugs falling down;
a normal-drug guide channel configured to guide the normal drugs to the dispensing block; and
a direction switching valve configured to guide the drugs falling down from the drug inspection device to one of the defective-drug receiving container and the normal-drug guide channel according to a result of the inspection by the drug inspection device.

12. The drug dispensing unit according to claim 11, wherein the dispensing block is formed to be movable in a horizontal direction perpendicular to a direction of gravity such that the drugs are sequentially received in the plurality of pocket-corresponding through-holes in a closed state of the lower openings thereof.

13. The drug dispensing unit according to claim 2, wherein the shutter has a flat plate shape, and is disposed under the dispensing block, and
wherein the shutter moves between a closed position at which the shutter closes the lower openings of all of the pocket-corresponding through-holes in the dispensing block and an open position at which the shutter opens the lower openings of all of the pocket-corresponding through-holes in the dispensing block.

14. A blister packing apparatus for drugs, the blister packing apparatus comprising:
the drug dispensing unit for a blister pack according to any one of claims 1 to 13;
a drug supply unit disposed above the drug dispensing unit for a blister pack to drop drugs to the drug inspection device;
a blister sheet supply unit configured to drop and supply a blister sheet having no drugs in the plurality of drug pockets one by one;
a cover attaching unit configured to attach a cover to an upper surface of the blister sheet, with the plurality of drug pockets filled with the drugs, to form a blister pack having the plurality of closed drug pockets; and
a blister sheet feeding unit configured to feed the blister sheet falling down from the blister sheet supply unit to a position below the dispensing block so as to be aligned with the dispensing block and to feed the blister sheet, with the plurality of drug pockets filled with the drugs falling down from the dispensing block, to the cover attaching unit.

15. The blister packing apparatus according to claim 14, wherein the blister sheet is fed to a position below the dispensing block so as to be aligned with the dispensing block by the blister sheet feeding unit between a time point at which the drugs start to be received in the dispensing block in a closed state of the shutter and a time point at which the shutter is opened.
